# EUROPÄISCHE PATENTSCHRIFT

(11) **EP 2 590 836 B1**
(45) Veröffentlichungstag und Bekanntmachung des Hinweises auf die Patenterteilung: **12.09.2018**
(21) Anmeldenummer: 11743024.9
(22) Anmeldetag: 05.07.2011
(51) Int. Cl.: B60L 11/18, H02J 5/00, B60L 3/00, H01M 10/44, H02J 7/02, H02J 7/04

(54) **MESSEN EINER TEMPERATUR BEI EINER KONTAKTLOSEN ÜBERTRAGUNG VON ENERGIE**
MEASURING A TEMPERATURE DURING CONTACTLESS TRANSMISSION OF ENERGY
MESURE D'UNE TEMPÉRATURE LORS D'UNE TRANSMISSION D'ÉNERGIE SANS CONTACT

(30) Priorität: 09.07.2010 DE 102010026780
(43) Veröffentlichungstag der Anmeldung: 15.05.2013
(73) Patentinhaber: Audi AG, 85045 Ingolstadt (DE)
(72) Erfinder: ELIAS, Björn, 85120 Hepberg (DE); SCHMIDT, Florian, 07985 Elsterberg (DE)
(74) Vertreter: Herbst, Matthias Heinz
(86) Internationale Anmeldenummer: PCT/EP2011/003315
(87) Internationale Veröffentlichungsnummer: WO 2012/003957

(56) Entgegenhaltungen:
- WO-A1-2009/081115
- DE-A1-102005 038 345
- DE-U1-202009 009 689
- US-A1- 2002 057 075
- US-A1- 2003 030 411
- US-A1- 2009 278 523
- US-A1- 2011 074 346

## Beschreibung

Die Erfindung betrifft die kontaktlose Übertragung von Energie zum Laden einer Batterie eines Kraftfahrzeugs.

Während eines Ladevorgangs von Traktionsbatterien bei Elektro- bzw. Hybridfahrzeugen ist im allgemeinen keine Person während der gesamten Zeit des Ladevorgangs anwesend. Daher muss man diesen Vorgang zum großen Teil als unüberwachtes Laden bezeichnen.

Bei der kontaktlosen Übertragung von Energie wird eine hohe magnetische Flussdichte erzeugt. Diese ist im Bereich zwischen dem Sender der Energie und dem Empfänger der Energie besonders groß. Dieses Magnetfeld erhitzt metallische bzw. elektrisch leitfähige Gegenstände. Unter gewissen Umständen können sich diese Gegenstände so stark erhitzen, dass sie zu Bränden oder Verbrennungen führen.

Eine gattungsgemäße Vorrichtung ist aus der WO 2009/081115 A1 bekannt. Zwar wird in diesem Dokument die Problematik des möglichen Aufheizens von Fremdkörpern im Bereich der Energieübertragung angesprochen, die Gegenstandserfassung erfolgt jedoch nur durch indirekte Messgrößen, was zu einer erhöhten Fehleranfälligkeit führt.

Aus der US 2002/0057075 A1 ist es bekannt, einen Temperatursensor in der Nähe zweier Spulen anzuordnen, um mit der Temperatur der Spulen übereinstimmende Spannungssignale zu detektieren.

Eine Vorrichtung zur kontaktlosen Übertragung von Energie ist außerdem in der US 2009/0278523 A1 beschrieben. Dabei ist eine Messeinrichtung zum Messen einer Temperatur zwischen dem Sender und dem Empfänger vorgesehen, mit welcher eine Fehlfunktion der Vorrichtung bei der kontaktlosen Übertragung von Energie detektiert werden kann.

Eine weitere Ladevorrichtung für ein Kraftfahrzeug ist in der US 2003/0030411 A1 beschrieben.

Eine Vorrichtung zur induktiven Übertragung elektrischer Energie, die eine Einrichtung zur Detektion des Vorhandenseins eines Gegenstands innerhalb eines vorbestimmten Raums, der zumindest den während der Energieübertragung liegenden Raum umfasst, ist in der DE 20 2009 009 689 U1 beschrieben.

Ein Kraftfahrzeug mit mehreren Temperatursensoren zum Messen einer Umgebungstemperatur ist in der DE 10 2005 038 345 A1 beschrieben.

Die nicht vorveröffentlichte US 2011/0074346 A1 beschreibt eine Vorrichtung zur kontaktlosen Übertragung von Energie zum Laden einer Batterie eines Kraftfahrzeugs.

Davon ausgehend liegt der Erfindung die Aufgabe zugrunde, die kontaktlose Übertragung von Energie zum Laden einer Batterie eines Kraftfahrzeugs sicherer zu machen.

Diese Aufgabe wird durch die in dem unabhängigen Patentanspruch angegebene Erfindung gelöst. Vorteilhafte Ausgestaltungen ergeben sich aus den abhängigen Patentansprüchen.

Dementsprechend weist eine Vorrichtung zur kontaktlosen Übertragung von Energie zum Laden einer Batterie eines Kraftfahrzeugs einen Empfänger zum Empfangen von Energie auf, die von einem Sender zum Senden der Energie ausgesandt wird. Die Vorrichtung verfügt weiterhin über eine Messeinrichtung zum Messen einer Temperatur in einem Bereich zwischen dem Sender und dem Empfänger.

Die Messeinrichtung zum Messen einer Temperatur weist ein Sensorsystem mit mehreren Sensoren auf, das am Unterboden des Kraftfahrzeugs angeordnet ist. Die Sensoren sind dabei bevorzugt als Sensoren ausgebildet, die Wärmestrahlung messen und/oder lokalisieren können. Weiter bevorzugt verfügen die Sensoren über eine Richtwirkung, wobei mehrere Sensoren mit unterschiedlichen Messrichtungen angeordnet sind.

Dieser Bereich umfasst in seiner vertikalen Ausrichtung insbesondere den bodennahen Raum, in dem Gegenstände liegen können. In seiner horizontalen Ausdehnung erfasst der Bereich den gesamte Raum, in den sich das zum Laden notwendige elektromagnetische Feld in einer Feldstärke erstreckt, die eine unzulässige Erhitzung von Gegenständen hervorrufen kann. Dies beinhaltet insbesondere den Raum, der durch eine zwischen dem Sender und dem Empfänger gedachte Verbindung begrenzt ist, geht weiter bevorzugt aber auch darüber hinaus, indem auch ein um 10 cm, weiter bevorzugt 30 cm, darum herum befindlicher Raum von der Messeinrichtung erfasst wird.

Somit kann während einer Übertragung von Energie, also während eines Ladevorgangs, jederzeit kontrolliert werden, ob ein Gegenstand im Zwischenraum zwischen Sender und Empfänger unzulässig erhitzt wird beziehungsweise eine Grenztemperatur überschreitet.

Der Sender und/oder der Empfänger sind vorzugsweise als Spulen ausgebildet, insbesondere als Primär- und Sekundärspule, zwischen denen bei der kontaktlosen Übertragung von Energie ein Zwischenraum besteht.

Der Empfänger ist insbesondere am Kraftfahrzeug angeordnet. Hier ist eine Anordnung am Unterboden des Kraftfahrzeugs besonders bevorzugt, da sich dadurch eine besonders gute Energieübertragung ergibt. Der Sender ist insbesondere auf oder unter der Oberfläche eines befahrbaren Untergrunds, etwa in Form einer Fahrbahn, angeordnet, so dass das Kraftfahrzeug zu einer kontaktlosen Übertragung von Energie über dem Sender abgestellt werden kann.

Die Batterie ist bevorzugt eine Traktionsbatterie, deren Energie zum Antrieb eines Rades des Kraftfahrzeugs nutzbar ist.

Weiter bevorzugt ist die Vorrichtung in Abhängigkeit der von der Messeinrichtung gemessenen Temperatur steuerbar, wobei beim Messen einer Temperatur und/oder einer Temperaturveränderung, die auf einen erhitzten Gegenstand zwischen dem Sender und dem Empfänger schließen lässt, die kontaktlose Übertragung von Energie zum Laden der Batterie abbrechbar und/oder die pro Zeiteinheit übertragene Energie reduzierbar ist.

Ein Kraftfahrzeug weist eine Vorrichtung der zuvor genannten Art auf.

Weitere Merkmale und Vorteile der Erfindung ergeben sich aus der Beschreibung eines Ausführungsbeispiels anhand der Zeichnung. Dabei zeigt
- Figur 1: eine Seitenansicht eines Kraftfahrzeugs und
- Figur 2: eine Draufsicht auf einen unterhalb des Kraftfahrzeugs befindlichen Gegenstand.

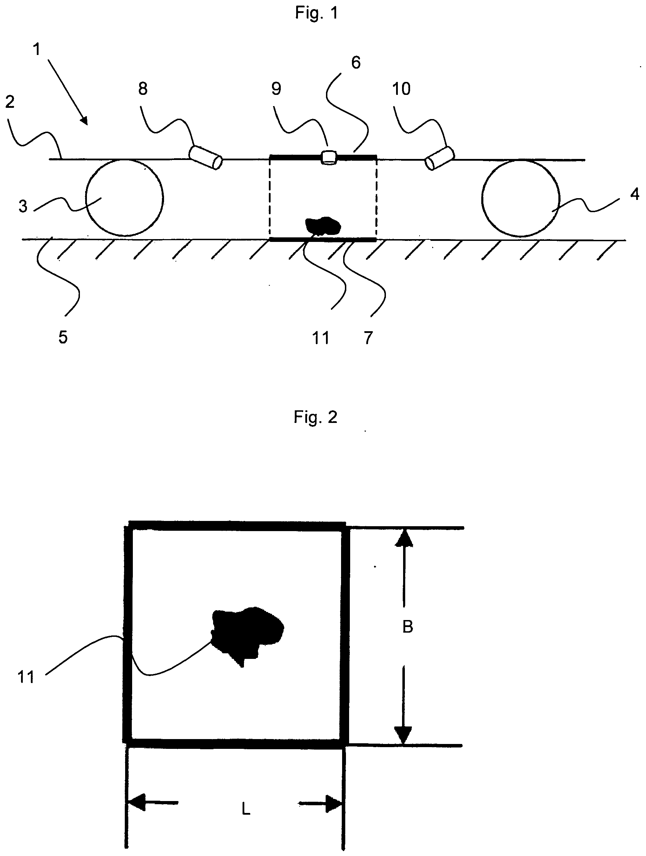

In Figur 1 erkennt man ein Kraftfahrzeug 1 mit einem Unterboden 2 und Rädern 3, 4, die auf einer Fahrbahn 5 stehen.

Eines oder mehrere der Räder 3, 4 werden von einem Elektromotor angetrieben, dem Energie von einer Traktionsbatterie zugeführt wird. Diese Batterie lässt sich durch eine Vorrichtung zur kontaktlosen Übertragung von Energie laden, die einen Empfänger 6 zum Empfangen der Energie zum Laden aufweist. Der Empfänger 6 ist als eine Spule im Unterboden 2 des Kraftfahrzeugs 1 ausgebildet.

Der Empfänger 6 der Vorrichtung zur kontaktlosen Übertragung von Energie empfängt die Energie zum Laden der Batterie von einem Sender 7, der an der Fahrbahn 5 angeordnet ist.

Die Vorrichtung zur kontaktlosen Übertragung von Energie weist eine Messeinrichtung zum Messen einer Temperatur zwischen dem Sender und dem Empfänger auf, die ein Sensorsystem mit drei Sensoren 8, 9, 10 aufweist, das am Unterboden 2 des Kraftfahrzeugs 1 angeordnet ist. In einer besonders kostengünstigen Variante, die nicht Teil der Erfindung ist, kann das Sensorsystem auch nur einen Sensor 9 aufweisen. Der oder die Sensoren können sich dabei sowohl unmittelbar am Empfänger 6 als auch an einer anderen Position im Bereich des Unterbodens 2 befinden. Die Sensoren 8, 9, 10 erfassen den zu überwachenden Bereich aus unterschiedlichen Richtungen.

Ein Sensor 9 ist dabei am Empfänger 6 angeordnet und weist eine Messrichtung direkt nach unten und zum Sender 7 hin auf. Weitere Sensoren 8, 10 sind seitlich des Zwischenraums zwischen Empfänger 6 und Sender 7 angeordnet und weisen Messrichtungen in diesen Zwischenraum hinein auf.

Während des Ladevorgangs können nun die Sensoren 8, 9, 10 die Temperatur bzw. die Temperaturveränderung im Spulenzwischenraum erfassen. Damit können erhitzte Gegenstände bzw. eine Erhitzung eines Gegenstandes 11, der sich in dem zu überwachenden Bereich befindet, über den die Energie in relevantem Umfang mittels eines elektromagnetischen Feldes übertragen wird, erkannt und der Ladevorgang abgebrochen und/oder die Ladeleistung reduziert werden. Somit stellt die hohe magnetische Flussdichte während des Ladevorgangs für die Erhitzung von leitfähigen Gegenständen kein Problem mehr dar, da besonders stark erhitzte Gegenstände, z.B. eine Dose, ein Schlüssel, ein Ring oder ein Blech, von der Messeinrichtung mit ihrem am Unterboden 2 des Fahrzeugs 1 integrierten Sensorsystems 8, 9, 10 erkannt werden.

## Patentansprüche

1. Vorrichtung zur kontaktlosen Übertragung von Energie zum Laden einer Batterie eines Kraftfahrzeugs (1) mit einem Empfänger (6) zum Empfangen von Energie von einem Sender (7) zum Senden der Energie, **dadurch gekennzeichnet, dass** die Vorrichtung eine Messeinrichtung zum Messen einer zwischen dem Sender (7) und dem Empfänger (6) herrschenden Temperatur aufweist, und dass die Messeinrichtung mehrere Sensoren (8, 9, 10) aufweist, die am Unterboden (2) des Kraftfahrzeugs (1) angeordnet sind, wobei zwei Sensoren (8,10) seitlich eines sich während des Ladens zwischen dem Empfänger (6) und dem Sender (7) ergebenden Zwischenraums angeordnet sind und Messrichtungen in diesen Zwischenraum hinein aufweisen, und wobei der Zwischenraum in seiner horizontalen Ausdehnung den gesamten Raum beinhaltet, in den sich das zum Laden notwendige elektromagnetische Feld in einer Feldstärke erstreckt, die eine unzulässige Erhitzung von Gegenständen hervorrufen kann.

2. Vorrichtung nach Anspruch 1, **dadurch gekennzeichnet, dass** durch die Messeinrichtung das Überschreiten eines Temperaturgrenzwertes detektierbar ist.

3. Vorrichtung nach Anspruch 1, **dadurch gekennzeichnet, dass** der Empfänger (6) als Spule ausgebildet ist.

4. Vorrichtung nach einem der vorhergehenden Ansprüche, **dadurch gekennzeichnet, dass** der Empfänger (6) am Kraftfahrzeug (1) angeordnet ist.

5. Vorrichtung nach einem der vorhergehenden Ansprüche, **dadurch gekennzeichnet, dass** die Batterie eine Traktionsbatterie ist.

6. Vorrichtung nach einem der vorhergehenden Ansprüche, **dadurch gekennzeichnet, dass** die Vorrichtung in Abhängigkeit der von der Messeinrichtung gemessenen Temperatur steuerbar ist, wobei beim Messen einer Temperatur und/oder einer Temperaturveränderung, die auf einen erhitzten Gegenstand (11) zwischen dem Sender (7) und dem Empfänger (6) schließen lässt, die kontaktlose Übertragung von Energie zum Laden der Batterie abbrechbar und/oder die pro Zeiteinheit übertragene Energie reduzierbar ist.

7. Kraftfahrzeug mit einer Vorrichtung nach einem der Ansprüche 1 bis 6.

## Claims

1. Device for contact-free transmission of energy for the charging of a battery of a motor vehicle (1) with a receiver (6) to receive energy from a transmitter (7) for the transmission of energy, **characterised in that** the device features a measuring apparatus to measure the temperature between the transmitter (7) and the receiver (6), and that the measuring apparatus features a plurality of sensors (8, 9, 10) which are arranged on the underbody (2) of the motor vehicle (1), wherein two sensors (8,10) are arranged at the side of an intermediate space resulting during the charging between the receiver (6) and the transmitter (7) and direct their measurements into this intermediate space, and wherein the intermediate space in its horizontal extension contains the whole space to which the electromagnetic field extends with a field strength which may bring about an unacceptable heating of objects.

2. Device according to claim 1 **characterised in that** through the measurement devices the exceeding of a temperature limit value can be detected.

3. Device according to claim 1 **characterised in that** the receiver (6) takes the form of a coil.

4. Device according to any one of the preceding claims, **characterised in that** the receiver (6) is arranged on the motor vehicle (1).

5. Device according to any one of the preceding claims, **characterised in that** the battery is a traction battery.

6. Device according to any one of the preceding claims, **characterised in that** the device can be controlled depending on the temperature measured by the measuring apparatus, wherein on measurement of a temperature and/or a temperature change which indicates a heated object (11) between the transmitter (7) and the receiver (6) the contactless transmission of energy for the charging of the battery can be interrupted and/or the energy transferred per time unit can be reduced.

7. Motor vehicle with a device according to any one of claims 1 to 6.

## Revendications

1. Dispositif servant à transférer sans contact de l'énergie pour charger une batterie d'un véhicule automobile (1) avec un récepteur (6) servant à recevoir de l'énergie d'un émetteur (7) servant à envoyer l'énergie, **caractérisé en ce que** le dispositif présente un système de mesure servant à mesurer une température régnant entre l'émetteur (7) et le récepteur (6), et que le système de mesure présente plusieurs capteurs (8, 9, 10), qui sont disposés au niveau de la sous-structure (2) du véhicule automobile (1), dans lequel deux capteurs (8, 10) sont disposés à côté d'un espace intermédiaire résultant lors de la charge entre le récepteur (6) et l'émetteur (7) et présentent des directions de mesure à l'intérieur dudit espace intermédiaire, et dans lequel l'espace intermédiaire renferme dans son extension horizontale l'ensemble de l'espace, dans lequel s'étend le champ électromagnétique nécessaire à la charge selon une intensité de champ, qui peut provoquer un réchauffement non admissible d'objets.

2. Dispositif selon la revendication 1, **caractérisé en ce que** le dépassement d'une valeur limite de température peut être détecté par le système de mesure.

3. Dispositif selon la revendication 1, **caractérisé en ce que** le récepteur (6) est réalisé sous la forme d'une bobine.

4. Dispositif selon l'une quelconque des revendications précédentes, **caractérisé en ce que** le récepteur (6) est disposé au niveau du véhicule automobile (1).

5. Dispositif selon l'une quelconque des revendications précédentes, **caractérisé en ce que** la batterie est une batterie de propulsion.

6. Dispositif selon l'une quelconque des revendications précédentes, **caractérisé en ce que** le dispositif peut être commandé en fonction de la température mesurée par le système de mesure, dans lequel lors de la mesure d'une température et/ou d'une variation de température, qui laisse conclure à un objet (11) réchauffé entre l'émetteur (7) et le récepteur (6), le transfert sans contact d'énergie pour la recharge de la batterie peut être interrompu et/ou l'énergie transférée par unité de temps peut être réduite.

7. Véhicule automobile avec un dispositif selon l'une quelconque des revendications 1 à 6.
